(19) Europäisches Patentamt
European Patent Office
Office européen des brevets

(11) EP 4 435 660 A1

(12) **EUROPEAN PATENT APPLICATION**
published in accordance with Art. 153(4) EPC

(43) Date of publication:
**25.09.2024 Bulletin 2024/39**

(51) International Patent Classification (IPC):
***G06F 30/27*** (2020.01)

(21) Application number: **22894711.5**

(86) International application number:
**PCT/CN2022/131320**

(22) Date of filing: **11.11.2022**

(87) International publication number:
**WO 2023/088174 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.11.2021 CN 202111401508**

(71) Applicant: **Hangzhou Hikvision Digital Technology Co., Ltd.**
**Hangzhou, Zhejiang 310051 (CN)**

(72) Inventors:
• **CHEN, Binbin**
**Hangzhou, Zhejiang 310051 (CN)**
• **CHEN, Weijie**
**Hangzhou, Zhejiang 310051 (CN)**
• **YANG, Shicai**
**Hangzhou, Zhejiang 310051 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **TARGET DETECTION METHOD AND APPARATUS**

(57) The present disclosure provides an object detection method and apparatus, including: adding pseudo labels to unlabeled data, dividing pseudo labels into high-quality pseudo labels and uncertain pseudo labels; inputting the unlabeled data to an initial learning model to obtain first predicted values; determining first predicted labels and first predicted boxes based on first predicted values corresponding to the high-quality pseudo labels, and determining second predicted labels and second predicted boxes based on first predicted values corresponding to the uncertain pseudo labels; inputting the unlabeled data to an initial management model to obtain second predicted values, and determining third predicted labels and third predicted boxes based on second predicted values corresponding to the uncertain pseudo labels; training the initial management model based on the first predicted labels, first predicted boxes, second predicted labels, second predicted boxes, third predicted labels and third predicted boxes to obtain a target management model, which is used to perform object detection on the data to be detected.

Acquire an initial management model and an initial learning model, add pseudo labels to unlabeled data based on the initial management model, and divide the pseudo labels into high-quality pseudo labels and uncertain pseudo labels — 101

Input the unlabeled data to the initial learning model, to obtain first predicted values corresponding to the unlabeled data; determine first predicted labels and first predicted boxes based on first predicted values corresponding to the high-quality pseudo labels, and determine second predicted labels and second predicted boxes based on first predicted values corresponding to the uncertain pseudo labels; input the unlabeled data to the initial management model, to obtain second predicted values corresponding to the unlabeled data, and determine third predicted labels and third predicted boxes based on second predicted values corresponding to the uncertain pseudo labels — 102

Train the initial management model based on the first predicted labels, the first predicted boxes, the second predicted labels, the second predicted boxes, the third predicted labels, and the third predicted boxes, to obtain a target management model; where, the target management model is configured to perform object detection on data to be detected — 103

FIG. 1

**Description**

**CROSS-REFERENCE TO RELATED APPLICATIONS**

The present disclosure claims priority of a Chinese patent application No. 202111401508.9, filed on November 19, 2021, the entire contents of which are incorporated herein by reference.

**TECHNICAL FIELD**

The present disclosure relates to artificial intelligence technology, and in particular to an object detection method and apparatus.

**BACKGROUND**

Machine learning (ML) is a way to achieve artificial intelligence, which is an interdisciplinary, involving probability theory, statistics, approximation theory, convex analysis, algorithm complexity theory, and other disciplines. ML is used to study how computers simulate or implement human learning behaviours, so as to acquire new knowledge or skills, or reorganize existing knowledge structures to continuously improve its performance. ML places greater emphasis on algorithm design, enabling computers to automatically learn patterns from data and use patterns to predict unknown data. ML has a wide range of applications, such as deep learning, data mining, computer vision, natural language processing, biometric recognition, search engines, medical diagnosis, speech recognition, and handwriting recognition, etc.

In order to implement artificial intelligence processing using ML, a training dataset may be constructed, which includes a large amount of labelled data (e.g., image data, i.e., images with bounding boxes and labelled categories). A ML model, for example, a ML model with object detection capabilities is obtained by training based on training datasets, which may be adopted to detect objects on the data to be detected, for example, to detect a target box in the data to be detected, and identify a target category, such as a vehicle category, an animal category, an electronic product category, etc.

In order to improve the performance of ML models, a large amount of labelled data needs to be acquired, and the more labelled data, the better the performance of the trained ML model. However, in order to obtain labelled data, a large amount of data needs to be annotated, which requires a lot of human resources.

**SUMMARY**

The present disclosure provides an object detection method, including:

acquiring an initial management model and an initial learning model, adding pseudo labels to unlabeled data based on the initial management model, and dividing the pseudo labels into high-quality pseudo labels and uncertain pseudo labels;

inputting the unlabeled data to the initial learning model, to obtain first predicted values corresponding to the unlabeled data; determining first predicted labels and first predicted boxes based on first predicted values corresponding to the high-quality pseudo labels, and determining second predicted labels and second predicted boxes based on first predicted values corresponding to the uncertain pseudo labels;

inputting the unlabeled data to the initial management model, to obtain second predicted values corresponding to the unlabeled data, and determining third predicted labels and third predicted boxes based on second predicted values corresponding to the uncertain pseudo labels;

training the initial management model based on the first predicted labels, the first predicted boxes, the second predicted labels, the second predicted boxes, the third predicted labels, and the third predicted boxes, to obtain a target management model;

where, the target management model is configured to perform object detection on data to be detected.

The present disclosure provides an object detection apparatus, including:

an acquisition module, configured to: acquire an initial management model and an initial learning model, add pseudo labels to unlabeled data based on the initial management model, and divide the pseudo labels into high-quality pseudo labels and uncertain pseudo labels;

a determining module, configured to: input the unlabeled data to the initial learning model, to obtain first predicted values corresponding to the unlabeled data; determine first predicted labels and first predicted boxes based on first predicted values corresponding to the high-quality pseudo labels; and determine second predicted labels and second predicted boxes based on first predicted values corresponding to the uncertain pseudo labels; input the unlabeled data to the initial management model, to obtain second predicted values corresponding to the unlabeled data, and determine third predicted labels and third predicted boxes based on second predicted values corresponding to the uncertain pseudo labels;

a processing module, configured to: train the initial management model based on the first predicted labels, the first predicted boxes, the second predicted labels, the second predicted boxes, the third predicted labels, and the third predicted boxes, to obtain a target management model; where, the target management model is configured to perform object detection on data to be detected.

The present disclosure provides an object detection device, including: a processor and a machine-readable storage medium, the machine-readable storage medium stores machine-executable instructions that can be executed by the processor; and

the processor is configured to execute the machine-executable instructions to implement the object detection method of the above examples.

The present disclosure further provides a machine-readable storage medium storing several computer instructions, when the computer instructions are executed by one or more processors, the object detection method disclosed in the above examples of the present disclosure can be implemented.

As can be seen from the above technical solutions, in embodiments of the present disclosure, a target management model may be obtained by training based on unlabeled data, i.e., a target management model may also be obtained by training with a mix of a small amount of labelled data and a large amount of unlabeled data, so as to avoid the acquisition of a large amount of labelled data, reduce the workload of annotation operations, save human resources, and enable the target management model to have good performance. The target management model, due to effectively utilizing pseudo-label data, has significantly improved compared to the baseline model. Setting different proportions of pseudo labels as high-quality pseudo labels can all achieve good training results, with good robustness to noisy samples and insensitivity to a hyperparameter. A semi-supervised object detection training method is proposed, drawing on the idea of maintaining consistency in the features after different augmentations of the same image in unsupervised representation learning, which establishes consistency constraints on the regression boxes and classifications of unlabeled data under different augmentations, combines pseudo labels and consistency constraints, uses pseudo labels as the true categories for reliable target boxes, and establishes consistency contrastive loss for uncertain objects.

## BRIEF DESCRIPTION OF DRAWINGS

In order to more clearly illustrate embodiments of the present disclosure or the technical solutions in the prior art, the drawings required to be used in the embodiments of the present disclosure or the prior art will be briefly described below, and obviously, the accompanying drawings in the following description are merely some embodiments recorded in the present disclosure, and those of ordinary skill in the art may further obtain other drawings according to the accompanying drawings of the embodiments of the present disclosure.

FIG. 1 is a flowchart of an object detection method according to an embodiment of the present disclosure.
FIG. 2 is a flowchart of an object detection method according to another embodiment of the present disclosure.
FIG. 3 is a structure diagram of an object detection apparatus according to an embodiment of the present disclosure.
FIG. 4 is a hardware structure diagram of an object detection device according to an embodiment of the present disclosure.

## DETAILED DESCRIPTION

The terms used in the present disclosure are merely for the purpose of describing specific embodiments, and are not intended to limit the present disclosure. The terms "a", "said" and "the" of singular forms used in the present disclosure and the appended claims are also intended to include plural forms, unless the context clearly indicates otherwise. It should also be understood that, the term "and/or" as used herein refers to any or all possible combinations including one or more associated listed items.

It should be understood that, although the terms first, second, third, etc. may be used in the embodiments of the present disclosure to describe various information, these information should not be limited to these terms. These terms are only used to distinguish the same type of information from each other. For example, without departing from the scope of the present disclosure, the first information may also be referred to as the second information, and similarly, the second information may also be referred to as first information. Depending on the context, in addition, the word "if' used may be interpreted as "upon", or "when", or "in response to determining".

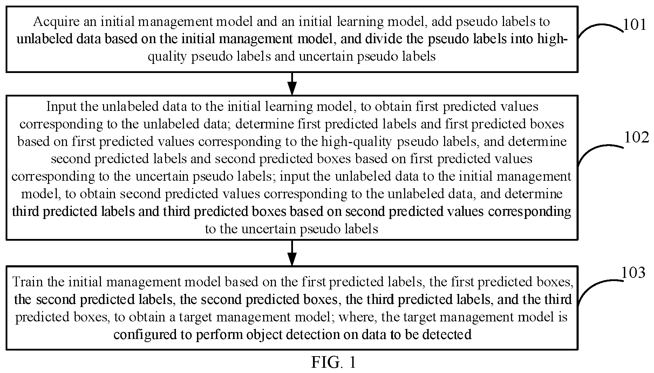

Embodiments of the present disclosure provide an object detection method, which may be applied to an object detection device, and the object detection device may be any type of device, such as a server, a terminal device, a management device, etc., which is not limited herein. Referring to FIG. 1, which is a flowchart of an object detection method, the object detection method in the embodiment may be a semi-supervised object detection method, and the method may include:

Step 101, acquiring an initial management model and an initial learning model, adding pseudo labels to unlabeled data based on the initial management model, and dividing the pseudo labels into high-quality pseudo labels and uncertain pseudo labels.

For example, acquiring an initial management model and an initial learning model may include but not limited to training with labelled data to obtain a baseline model, and generating the initial management model and the initial learning model based on the baseline model. The initial management model may have a same network structure as the baseline model, and the network parameters of the initial management model may be the same or different from those of the baseline model. The initial learning model has a same network structure as the baseline model, and the network parameters of the initial learning model are the same or different from those of the baseline model. The initial management model has a same network structure as the initial learning model, and the network parameters of the initial management model are the same or different from those of the initial learning model.

For example, adding pseudo labels to unlabeled data based on the initial management model, and dividing the pseudo labels into high-quality pseudo labels and uncertain pseudo labels may include but not limited to that, for each unlabeled data piece, the unlabeled data piece is input to the initial management model, to obtain a pseudo label corresponding to the unlabeled data piece and a probability value corresponding to the pseudo label. On this basis, for each category supported by the initial management model for detection, all pseudo labels corresponding to the category are sorted based on probability values of all the pseudo labels corresponding to the category; based on the sorting results, K number of pseudo labels with high probability values are selected as high-quality pseudo labels corresponding to the category, and the remaining pseudo labels among the all pseudo labels corresponding to the category except for the high-quality pseudo labels corresponding to the category are used as the uncertain pseudo labels corresponding to the category. K is a positive integer.

Step 102, inputting the unlabeled data to the initial learning model, to obtain first predicted values corresponding to the unlabeled data; determining first predicted labels and first predicted boxes based on first predicted values corresponding to the high-quality pseudo labels, and determining second predicted labels and second predicted boxes based on first predicted values corresponding to the uncertain pseudo labels; inputting the unlabeled data to the initial management model, to obtain second predicted values corresponding to the unlabeled data, and determining third predicted labels and third predicted boxes based on second predicted values corresponding to the uncertain pseudo labels.

For example, a first data augmentation may be performed on the unlabeled data, and the augmented unlabeled data after the first data augmentation is input to the initial learning model, to obtain the first predicted values corresponding to the unlabeled data.

For example, a second data augmentation may be performed on the unlabeled data, and the augmented unlabeled data after the second data augmentation is input to the initial management model, to obtain the second predicted values corresponding to the unlabeled data.

For example, the manner of the first data augmentation may be different from the manner of the second data augmentation.

Step 103, training the initial management model based on the first predicted labels, the first predicted boxes, the second predicted labels, the second predicted boxes, the third predicted labels, and the third predicted boxes, to obtain a target management model; where, the target management model is configured to perform object detection on data to be detected. For example, to obtain a target management model, the initial management model may be trained by using the following steps 1031-1032:

Step 1031, determining a first loss value based on the first predicted label and the first predicted box, and determining a second loss value based on the second predicted label, the second predicted box, the third predicted label, and the third predicted box.

For example, the initial learning model and the initial management model support the same number of categories for detection. Determining the second loss value based on the second predicted label, the second predicted box, the third predicted label, and the third predicted box may include but not limited to that, if the second predicted label includes C number of the first probability values corresponding to C number of categories supported by the initial learning model for detection, and the third predicted label includes C number of the second probability values corresponding to C number of categories supported by the initial management model for detection, a classification loss value of consistency constraint is determined based on the C number of the first probability values and the C number of the second probability values, where C is a positive integer greater than 1. The first probability distributions of coordinate point offsets corresponding to the second predicted box are determined, and the second probability distributions of coordinate point offsets corresponding to the third predicted box are determined. And then, a coordinate box loss value of consistency constraint is determined based on the first probability distributions and the second probability distributions. The second loss value is determined based on the classification loss value and the coordinate box loss value.

In a possible implementation, determining a coordinate box loss value of consistency constraint based on the first probability distributions and the second probability distributions may include but not limited to determining a relative entropy between the first probability distributions and the second probability distributions, and determining a consistency-constrained coordinate box loss value based on the relative entropy.

Step 1032, adjusting the initial management model based on the first loss value and the second loss value, to obtain a target management model, where, the target management model is configured to perform object detection on data to be detected.

For example, before step 1032, labelled data may further be input to the initial learning model, to obtain the third predicted values corresponding to the labelled data, then the fourth predicted labels and the fourth predicted boxes are determined based on the third predicted values, and then a third loss value is determined based on the fourth predicted label and the fourth predicted box.

On this basis, for step 1032, the initial management model may be adjusted based on the first loss value, the second loss value, and the third loss value, to obtain a target management model.

For example, adjusting the initial management model based on the first loss value and the second loss value, to obtain a target management model may include but not limited to adjusting the network parameters of the initial learning model based on the first loss value and the second loss value, to obtain an adjusted learning model; adjusting the network parameters of the initial management model based on the network parameters of the adjusted learning model, to obtain an adjusted management model; if the adjusted management model does not converge, determining the adjusted learning model as the initial learning model, determining the adjusted management model as the initial management model, returning to the execution (i.e., step 101) of adding pseudo labels to unlabeled data based on the initial management model, and dividing the pseudo labels into high-quality pseudo labels and uncertain pseudo labels; and if the adjusted management model has converged, determining the adjusted management model as the target management model.

For example, adjusting the network parameters of the initial management model based on the network parameters of the adjusted learning model, to obtain an adjusted management model may include but not limited to determining parameter correction values of the network parameters based on the network parameters of the adjusted learning model and a configured proportion coefficient, and adjusting the network parameters of the initial management model based on the parameter correction values, to obtain the adjusted management model.

It may be seen from the above technical solutions that, in embodiments of the present disclosure, a target management model may be obtained by training based on unlabeled data, i.e., a target management model may also be obtained by training with a mix of a small amount of labelled data and a large amount of unlabeled data, so as to avoid consumption of human resources for acquiring a large amount of labelled data, help to reduce the workload of annotation operations, save human resources, and enable the target management model to have good performance. The target management model, due to effectively utilizing pseudo-label data, has significantly improved compared to the baseline model. Setting different proportions of pseudo labels as high-quality pseudo labels can all achieve good training results, with good robustness to noisy samples and insensitivity to a hyperparameter. A semi-supervised object detection training method is proposed, drawing on the idea of maintaining consistency in the features after different augmentations of the same image in unsupervised representation learning, which establishes consistency constraints on the regression boxes and classifications of unlabeled data under different augmentations, combine pseudo labels and consistency constraints, uses pseudo labels as the true categories for reliable target boxes, and establishes consistency contrastive loss of different prediction results (or features) for uncertain objects.

The following describes the technical solutions of embodiments of the present disclosure with reference to specific application scenarios.

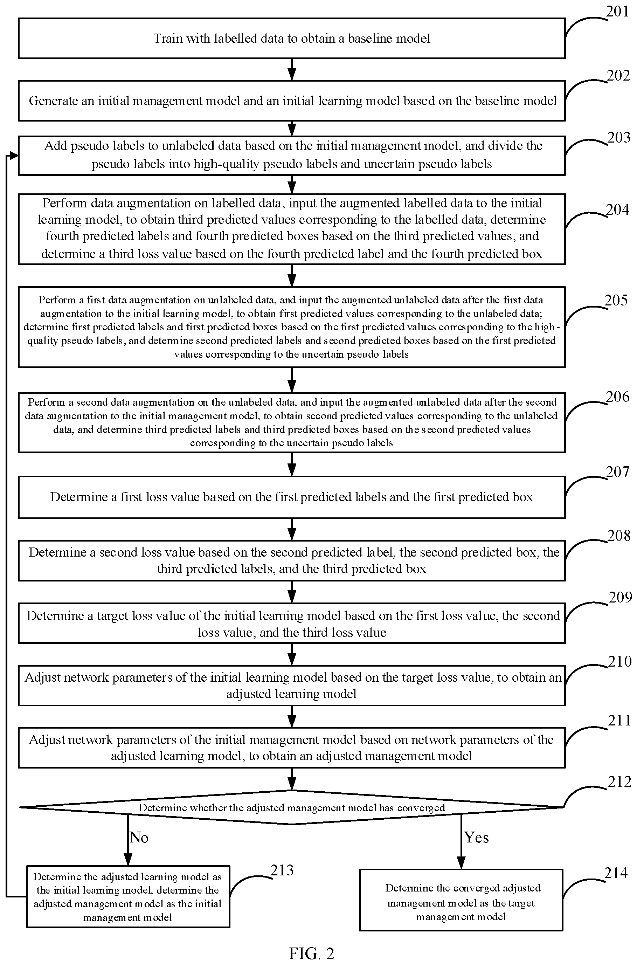

Embodiments of the present disclosure provide an object detection method, which is a consistency-based semi-supervised object detection method. In a semi-supervised object detection method, partially annotated data may be used in combination with large-scale unannotated data to train a model, achieving the performance similar to using fully annotated data. FIG. 2 is a flowchart of an object detection method, as illustrated in FIG. 2, the method may include:
Step 201, training with labelled data to obtain a baseline model.

For example, a training dataset may be preconstructed, which may include a plurality of labelled data pieces (e.g., labelled images). For each labelled data piece, the labelled data piece corresponds to annotation information, the annotation information includes but not limited to an annotation box (e.g., when an annotation box is rectangular, it may be the coordinates of four vertices of the rectangular annotation box ) and an annotation category (i.e. the category of the target object within the annotation box).

For example, an initial network model may be acquired in advance, which can be a ML model, such as a ML model based on deep learning algorithms, a ML model based on neural networks, etc., and there is no restriction on the type of a ML model herein. There is no restriction on the structure of the initial network model in the embodiment.

Regarding the functions of the initial network model, the initial network model may implement object detection.

For example, based on labelled data in a training dataset, the initial network model may be trained without any limitations, and the initial network model that has been trained is referred to as the baseline model, that is to say, a baseline model may be obtained by training with the labelled data in the training dataset.

During the training process of the initial network model, labelled data is input to the initial network model, which processes the labelled data to obtain the predicted box and predicted label corresponding to the labelled data. The predicted box is used to represent the position where the target object is located, e.g., the coordinates of four vertices. The predicted label is used to represent the category of the target object, such as category 1. If the initial network model supports detection of target objects of category 1 and target objects of category 2, then when the predicted label is 0, it represents that the category of the target object is category 1, and when the predicted label is 1, it represents that the category of the target object is category 2.

The category loss value may be determined based on the predicted label corresponding to the labelled data and the annotation category (i.e., the true category) corresponding to the labelled data, and the coordinate box loss value may be determined based on the predicted box corresponding to the labelled data and the annotation box (i.e., the true box) corresponding to the labelled data. Then, the target loss value of the initial network model is determined based on the classification loss value and the coordinate box loss value, for example, the following formula (1) may be used to determine the target loss value of the initial network model:

$$L = L_{loc} + L_{cls} \qquad (1),$$

In the above formula (1), $L$ represents the target loss value of the initial network model, $L_{loc}$ represents the coordinate box loss value, $L_{cls}$ represents the classification loss value.

For the classification loss value $L_{cls}$, if the predicted label matches the annotation category (e.g., the two are the same), then the classification loss value is smaller (e.g., the classification loss value is the minimum loss value). If the predicted label does not match the annotation category (e.g., the two are different), then the classification loss value is larger (e.g., the classification loss value is the maximum loss value). Certainly, the above is merely an example of determining a classification loss value, which is not limited herein.

For the coordinate box loss value $L_{loc}$, if the predicted box matches the annotation box (e.g., the coordinates of four vertices of the predicted box are the same as the coordinates of four vertices of the annotation box), then the coordinate box loss value is smaller (e.g., the coordinate box loss value is the minimum loss value). If the predicted box does not match the annotation box (e.g., the coordinates of four vertices of the predicted box are not the same as the coordinates of four vertices of the annotation box), then the proximity of the predicted box (e.g., the coordinates of four vertices of the predicted box) to the annotation box (e.g., the coordinates of four vertices of the annotation box) is determined. The closer the predicted box is to the annotation box, the smaller the coordinate box loss value. The larger the difference between the predicted box and the annotation box, the larger the coordinate box loss value.

For example, probability distributions (such as Gaussian distribution) of the offsets of the coordinate points corresponding to the coordinates of four vertices of the predicted box are determined, i.e., coordinates of each vertex of the predicted box correspond to a probability distribution, e.g., the probability distribution a1 corresponding to the vertex coordinates of the top left corner of the predicted box, the probability distribution a2 corresponding to the vertex coordinates of the top right corner of the predicted box, the probability distribution a3 corresponding to the vertex coordinates of the bottom right corner of the predicted box, and the probability distribution a4 corresponding to the vertex coordinates of the bottom left corner of the predicted box. And, probability distributions of the offsets of the coordinate points corresponding to the coordinates of four vertices of the annotation box are determined, i.e., coordinates of each vertex of the annotation box correspond to a probability distribution, e.g., the probability distribution b 1 corresponding to the vertex coordinates of the top left corner of the annotation box, the probability distribution b2 corresponding to the vertex coordinates of the top right corner of the annotation box, the probability distribution b3 corresponding to the vertex coordinates of the bottom right corner of the annotation box, and the probability distribution b4 corresponding to the vertex coordinates of the bottom left corner of the annotation box. When determining the probability distribution corresponding to the vertex coordinates, the probability distribution may be represented by a mean and a variance, e.g., the probability distribution corresponding to coordinates of a vertex $x$ (e.g., the coordinates of the vertex of the predicted box or the annotation box) is represented as $N(\mu_{tx}, \Sigma_{tx})$.

Based on the probability distributions corresponding to the coordinates of four vertices of the predicted box and the probability distributions corresponding to the coordinates of four vertices of the annotation box, the coordinate box loss value between the predicted box and the annotation box may be calculated. For example, based on a probability distribution a1 and a probability distribution b 1, a negative log likelihood loss value is calculated; based on a probability distribution a2 and a probability distribution b2, a negative log likelihood loss value is calculated; based on a probability distribution a3 and a probability distribution b3, a negative log likelihood loss value is calculated; and based on a probability distribution a4 and a probability distribution b4, a negative log likelihood loss value is calculated. The coordinate box loss value is determined based on the above-mentioned four negative log likelihood loss values, e.g., the mean of the four negative log likelihood loss values is used as the coordinate box loss value, or the sum of the four negative log likelihood loss values is used as the coordinate box loss value. Certainly, the above is merely an example, which is not limited herein, as long as the coordinate box loss value can be obtained based on the probability distributions.

During the training process of the initial network model, after obtaining the target loss value of the initial network model, the network parameters of the initial network model may be adjusted based on this target loss value, e.g., using a gradient descent method to adjust the network parameters of the initial network model, the adjustment process is not limited in the embodiments herein. Using the adjusted network model as the initial network model, return to the execution of inputting labelled data to the initial network model, and so on, until the initial network model has converged (e.g., the number of iterations of the initial network model reaches a number threshold, or the target loss value is less than a loss value threshold), and then the converged initial network model is used as the baseline model. Until now, a baseline model is obtained by training with labelled data.

Step 202, generating an initial management model and an initial learning model based on the baseline model.

For example, an initial management model (which may also be referred to as an initial teacher model) may be generated based on the baseline model, the initial management model may have the same network structure as the baseline model, and the network parameters of the initial management model may be the same or different from those of the baseline model. For example, the baseline model may be directly used as the initial management model, or the network parameters of the baseline model may be adjusted and the adjusted baseline model after network parameter adjustment is used as the initial management model.

For example, an initial learning model (which may also be referred to as an initial student model) may be generated based on the baseline model, the initial learning model has the same network structure as the baseline model, and the network parameters of the initial learning model are the same or different from those of the baseline model For example, the baseline model may be directly used as the initial learning model, or the network parameters of the baseline model may be adjusted and the adjusted baseline model after network parameter adjustment is used as the initial learning model.

Step 203, adding pseudo labels to unlabeled data based on the initial management model, and dividing the pseudo labels into high-quality pseudo labels and uncertain pseudo labels. For example, the pseudo labels corresponding to the unlabeled data are determined based on the initial management model, and the pseudo labels are divided into high-quality pseudo labels or uncertain pseudo labels.

For example, a sample dataset may be preconstructed, which may include a plurality of unlabeled data pieces (e.g., unlabeled images), i.e., unlabeled data may be added to the sample dataset. For each unlabeled data piece, the unlabeled data piece has no annotation information, i.e., which has no corresponding annotation box and annotation category.

For example, for each unlabeled data piece in the sample dataset, the unlabeled data piece may be input to the initial management model, which processes the unlabeled data piece to obtain a predicted box corresponding to the unlabeled data piece, the predicted label corresponding to the predicted box corresponding to the unlabeled data piece, and the probability value corresponding to the predicted label (i.e., the probability value that the target object in the predicted box is the predicted label).

For example, if the initial management model supports object detection for category 1, category 2, and category 3, after processing the unlabeled data, the initial management model may obtain a predicted box and a corresponding probability vector, e.g., the probability vector may be [0.9, 0.06, 0.04], then based on this probability vector, it may be learned that the predicted label corresponding to the predicted box is category 1, and the probability value corresponding to the predicted label is 0.9.

For each unlabeled data piece, the unlabeled data piece may correspond to P number of predicted boxes, P is a positive integer, each predicted box corresponds to a predicted label, i.e., P number of predicted boxes correspond to P number of predicted labels, and each predicted label corresponds to a probability value. In addition, each predicted box may also correspond to a probability value. For example, the initial management model processes unlabeled data, to obtain the predicted box 1 and probability value of predicted box 1, the predicted label 1 corresponding to the predicted box 1 and the probability value of predicted label 1, as well as the predicted box 2 and probability value of predicted box 2, the predicted label 2 corresponding to the predicted box 2 and the probability value of predicted label 2.

The predicted boxes corresponding to unlabeled data and the predicted labels corresponding to the predicted boxes may be called pseudo labels, and the probability values corresponding to the predicted labels and the probability values corresponding to the predicted boxes may be called the probability values corresponding to the pseudo labels. Therefore, after inputting unlabeled data to the initial management model, the pseudo labels (i.e. the predicted boxes and predicted labels) corresponding to the unlabeled data and the probability values corresponding to the pseudo labels may be obtained.

In summary, after inputting a plurality of unlabeled data pieces from the sample dataset to the initial management model, a large number of pseudo labels may be obtained, and for each pseudo label, the corresponding probability value of the pseudo label may be obtained.

For example, for each category supported by the initial management model for detection, all pseudo labels corresponding to the category are sorted based on the probability values of all the pseudo labels corresponding to the category, where the category of the pseudo label is determined based on the predicted label of the pseudo label. Based on the sorting results, K number of pseudo labels with high probability values are selected as high-quality pseudo labels corresponding to the category, and the remaining pseudo labels among the all pseudo labels corresponding to the category except for the high-quality pseudo labels corresponding to the category are used as the uncertain pseudo labels corresponding to the category.

Assuming that the initial management model supports object detection for category 1, category 2, and category 3, for each pseudo label, if the predicted label in the pseudo label is category 1, then the pseudo label corresponds to category 1, if the predicted label in the pseudo label is category 2, then the pseudo label corresponds to category 2, and if the predicted label in the pseudo label is category 3, then the pseudo label corresponds to category 3. In summary, for each category supported by the initial management model for detection, all pseudo labels (i.e., the predicted boxes and predicted labels) corresponding to the category may be obtained, e.g., category 1 corresponds to pseudo labels c1-c100, category 2 corresponds to pseudo labels c101-c300, and category 3 corresponds to pseudo labels c301-c600.

Based on the probability values of all the pseudo labels corresponding to the category, all the pseudo labels corresponding to the category are sorted. For example, based on the probability values corresponding to the predicted labels in the pseudo labels, all the pseudo labels corresponding to the category are sorted from the largest to smallest of the probability values corresponding to the predicted labels in the pseudo labels, or all the pseudo labels corresponding to the category are sorted from the smallest to largest of the probability values corresponding to the predicted labels. For another example, probability product values (or probability average values) between the probability values corresponding to the predicted labels in the pseudo labels and the probability values corresponding to the predicted boxes in the pseudo labels are calculated, all the pseudo labels corresponding to the category are sorted from the largest to smallest of the probability product values, or, all the pseudo labels corresponding to the category are sorted from the smallest to largest of the probability product values. Certainly, other sorting methods may also be used, without any restrictions, which is not limited herein.

Based on the sorting results, K number of pseudo labels with high probability values may be selected as high-quality pseudo labels corresponding to the category, and the remaining pseudo labels among the all pseudo labels corresponding to the category except for the high-quality pseudo labels corresponding to the category are used as the uncertain pseudo labels corresponding to the category. For example, if sorted from the largest to smallest of the probability values (or probability product values) corresponding to the predicted labels, the K number of pseudo labels at the top of the ranking may be selected as high-quality pseudo labels, and the remaining pseudo labels may be used as the uncertain pseudo labels, if sorted from the smallest to largest of the probability values (or probability product values) corresponding to the predicted labels, the K number of bottom ranked pseudo labels at the bottom of the ranking may be selected as high-quality pseudo labels, and the remaining pseudo labels may be used as the uncertain pseudo labels.

For the pseudo labels c1-c100 corresponding to category 1, the pseudo labels c1-c100 are sorted from the largest to smallest of the predicted probability values (corresponding to category 1), the K number of pseudo labels (e.g., c1-c10) at the top of the ranking are selected as the high-quality pseudo labels, and the remaining pseudo labels (e.g., c11-c100) are used as the uncertain pseudo labels. For the pseudo labels c101-c300 corresponding to category 2, the pseudo labels c101-c300 are sorted from the largest to smallest of the predicted probability values (corresponding to category 2), the K number of pseudo labels at the top of the ranking are selected as the high-quality pseudo labels, and the remaining pseudo labels are used as the uncertain pseudo labels, and so on, the high-quality pseudo labels and uncertain pseudo labels corresponding to each category may be obtained.

The value of K may be configured based on experiences, or may be determined based on the total number of pseudo labels corresponding to the category, for example, K is equal to the total number multiplied by M, and M is a value between 0 and 1, which may be configured based on experiences, e.g., 20%, 30%, etc. In the case where M is equal to 20%, since category 1 corresponds to 100 pseudo labels, and the value of K is 20, the top 20 pseudo labels are selected from all the pseudo labels corresponding to category 1 as high-quality pseudo labels, and the remaining 80 pseudo labels are used as the uncertain pseudo labels. Since category 2 corresponds to 200 pseudo labels, and the value of K is 40, the top 40 pseudo labels are selected from all the pseudo labels corresponding to category 2 as high-quality pseudo labels, and the remaining 160 pseudo labels are used as the uncertain pseudo labels, and so on.

In summary, all pseudo labels corresponding to all unlabeled data in the sample dataset may be divided into the high-quality pseudo labels and the uncertain pseudo labels. The high-quality pseudo labels may be used as reliable labels, and in the subsequent training process, the high-quality pseudo-labelled may be used as labelled data, i.e., the high-quality pseudo label is provided with a corresponding annotation box and annotation category. For example, the predicted box output by the initial management model is used as the annotation box for the high-quality pseudo label, and the predicted label output by the initial management model is used as the annotation category for the high-quality pseudo label.

In summary, the labelled data, high-quality pseudo labels, and uncertain pseudo labels may be obtained. On this basis, joint training may be performed based on the labelled data and unlabeled data (these unlabeled data may include high-quality pseudo-labelled unlabeled data and uncertain pseudo-labelled unlabeled data), i.e., a semi-supervised joint training is performed. In the joint training process, the ratio of labelled data to unlabeled data may be m:n, i.e., the ratio of the total number of labelled data to the total number of unlabeled data is m:n, the m:n may be configured based on experiences and not limited herein, e.g., 1:1, 1:2, 2: 1, etc.

The semi-supervised training process may, continuing to refer to FIG. 2, include the following steps:

Step 204, performing data augmentation on labelled data, inputting the augmented labelled data to the initial learning model, to obtain third predicted values corresponding to the labelled data, determining fourth predicted labels and fourth predicted boxes based on the third predicted values, and determining a third loss value based on the fourth predicted label and the fourth predicted box.

For each labelled data piece, spatial transformation and/or colour transformation may be used to perform data augmentation on the labelled data piece, the process of which is not limited, to obtain the augmented labelled data.

In the joint training process, the augmented labelled data may be input to the initial learning model, which processes the labelled data to obtain the third predicted value corresponding to the labelled data, the third predicted value may include a predicted box and a predicted label. For convenience, the predicted box is referred to as the fourth predicted box, and the predicted label is referred to as the fourth predicted label, i.e., the fourth predicted label and the fourth predicted box may be determined based on the third predicted value. The fourth predicted box is used to represent the position where the target object is located, e.g., the coordinates of four vertices, and the fourth predicted label is used to represent the category of the target object, such as category 1, category 2, or category 3.

For labelled data, the labelled data is provided with corresponding annotation information, e.g., an annotation box and an annotation category. On this basis, the classification loss value may be determined based on the fourth predicted label corresponding to labelled data and the annotation category corresponding to the labelled data, and the coordinate box loss value may be determined based on the fourth predicted box corresponding to the labelled data and the annotation box corresponding to the labelled data. Then, the third loss value is determined based on the classification loss value and coordinate box loss value. For example, the following formula (2) is used to determine the third loss value:

$$ L = L_{loc} + L_{cls} \qquad (2), $$

where, $L$ represents the third loss value, $L_{loc}$ represents the coordinate box loss value, $L_{cls}$ represents the classification loss value.

For the classification loss value $L_{cls}$, if a fourth predicted label matches an annotation category, the classification loss value is smaller, e.g., the classification loss value is the minimum loss value, and if a fourth predicted label does not match an annotation category, the classification loss value is larger, e.g., the classification loss value is the maximum loss value.

For the coordinate box loss value $L_{loc}$, if a fourth predicted box matches an annotation box, the coordinate box loss value is smaller, e.g., the coordinate box loss value is the minimum loss value. If a fourth predicted box does not match an annotation box, the proximity of the coordinates of four vertices of the fourth predicted box to the coordinates of four vertices of the annotation box may be determined. The closer the fourth predicted box to the annotation box, the smaller the coordinate box loss value. The larger the difference between the fourth predicted box and the annotation box, the larger the coordinate box loss value.

For example, the probability distributions of the offsets of the coordinate points corresponding to the coordinates of four vertices of the fourth predicted box are determined, i.e., coordinates of each vertex of the fourth predicted box corresponds to a probability distribution, and the probability distributions of the offsets of the coordinate points corresponding to the coordinates of four vertices of the annotation box are determined, i.e., coordinates of each vertex of the annotation box corresponds to a probability distribution. When determining the probability distribution corresponding to coordinates of the vertex, the probability distribution is represented by a mean and a variance, e.g., the probability distribution corresponding to the coordinates of the vertex x (e.g., coordinates of the vertex of the predicted box or the annotation box) is $N(\mu_{tx}, \Sigma_{tx})$.

Based on the probability distributions corresponding to the coordinates of four vertices of the fourth predicted box and the probability distributions corresponding to the coordinates of four vertices of the annotation box, the coordinate box loss value between the fourth predicted box and the annotation box may be calculated. For example, negative log likelihood loss values may be calculated based on the probability distributions corresponding to the fourth predicted box and the probability distributions corresponding to the annotation box, and the coordinate box loss value may be obtained based on the negative log likelihood loss values.

In summary, the classification loss value and the coordinate box loss value corresponding to labelled data may be obtained, and the third loss value corresponding to the labelled data may be determined based on the classification loss value and the coordinate box loss value.

Step 205, performing a first data augmentation on unlabeled data, and inputting the augmented unlabeled data after the first data augmentation to the initial learning model, to obtain first predicted values corresponding to the unlabeled data; determining first predicted labels and first predicted boxes based on the first predicted values corresponding to the high-quality pseudo labels, and determining second predicted labels and second predicted boxes based on the first predicted values corresponding to the uncertain pseudo labels.

For example, for each unlabeled data piece, spatial transformation and/or colour transformation may be used to perform the first data augmentation on the unlabeled data piece, to obtain the augmented unlabeled data after the first data augmentation.

For example, during the joint training process, the augmented unlabeled data after the first data augmentation may be input to the initial learning model, which processes the unlabeled data, to obtain the first predicted values corresponding to the unlabeled data, and the first predicted value may include a predicted box and a predicted label.

Referring to step 203, pseudo labels have been added to the unlabeled data and divided into high-quality pseudo labels and uncertain pseudo labels, the high-quality pseudo label may have a corresponding predicted box (i.e. as an annotation box) and a predicted label (i.e. as an annotation category), and the uncertain pseudo label may have a corresponding predicted box and a predicted label.

On this basis, if a predicted box in a first predicted value matches a predicted box corresponding to a high-quality pseudo label, i.e., the two represent the predicted box of the same region in the same unlabeled data piece (e.g., an unlabeled image), then the first predicted value is a first predicted value corresponding to the high-quality pseudo label. The predicted label in the first predicted value is used as the first predicted label, and the predicted box in the first predicted value is used as the first predicted box, i.e., the first predicted label and the first predicted box are determined based on the first predicted value corresponding to the high-quality pseudo label.

If a predicted box in a first predicted value matches a predicted box corresponding to an uncertain pseudo label, i.e., the two represent the predicted box of the same region in the same unlabeled data piece (e.g., an unlabeled image), then the first predicted value is a first predicted value corresponding to the uncertain pseudo label. The predicted label in the first predicted value is used as the second predicted label, and the predicted box in the first predicted value is used as the second predicted box, i.e., the second predicted label and the second predicted box are determined based on the first predicted value corresponding to the uncertain pseudo label.

The second predicted box is used to represent the position where the target object is located, e.g., the coordinates of four vertices, and the second predicted label is used to represent the category of the target object. The second predicted label may include C number of first probability values corresponding to C number of categories supported by the initial learning model for detection, and C may be a positive integer greater than 1. For example, assuming that the initial learning model supports object detection for category 1, category 2, and category 3, the second predicted label may include the first probability value corresponding to category 1 (e.g., 0.5), the first probability value corresponding to category 2 (e.g., 0.3), and the first probability value corresponding to category 3 (e.g., 0.2), i.e., the second predicted label is [0.5, 0.3, 0.2].

Step 206, performing a second data augmentation on the unlabeled data, and inputting the augmented unlabeled data after the second data augmentation to the initial management model, to obtain second predicted values corresponding to the unlabeled data, and determining third predicted labels and third predicted boxes based on the second predicted values corresponding to the uncertain pseudo labels.

For example, for each unlabeled data piece, spatial transformation and/or colour transformation may be used to perform the second data augmentation on the unlabeled data piece, to obtain the augmented unlabeled data after the second data augmentation. The manner of the first data augmentation may be different from the manner of the second data augmentation, i.e., by using different augmentation manners to perform data augmentation twice on the same unlabeled data piece, to obtain two augmented unlabeled data pieces after data augmentation, one of which is input to the initial learning model, and the other is input to the initial management model.

For example, during the joint training process, the augmented unlabeled data after the second data augmentation may be input to the initial management model, which processes the unlabeled data to obtain the second predicted values corresponding to the unlabeled data, and the second predicted value may include a predicted box and a predicted label.

Referring to step 203, pseudo labels have been added to the unlabeled data and divided into high-quality pseudo labels and uncertain pseudo labels, the high-quality pseudo label may have a corresponding predicted box and a predicted label, and the uncertain pseudo label may have a corresponding predicted box and a predicted label. On this basis, if a predicted box in a second predicted value matches a predicted box corresponding to a high-quality pseudo label, the predicted box and the predicted label in the second predicted value is no longer to be considered, i.e., which does not participate in the subsequent training. If a predicted box in a second predicted value matches a predicted box corresponding to an uncertain pseudo label, i.e., the two represent the predicted box of the same region in the same unlabeled data piece (e.g., an unlabeled image), the second predicted value is a second predicted value corresponding to the uncertain pseudo label. The predicted label in the second predicted value is used as the third predicted label, and the predicted box in the second predicted value is used as the third predicted box, i.e., the third predicted label and the third predicted box are determined based on the second predicted value corresponding to the uncertain pseudo label.

The third predicted box is used to represent the position where the target object is located, e.g., the coordinates of four vertices, and the third predicted label is used to represent the category of the target object. The third predicted label may include C number of first probability values corresponding to C number of categories supported by the initial management model for detection, and C may be a positive integer greater than 1. For example, assuming that the initial management model supports three categories, category 1, category 2, and category 3, the third predicted label may include the second probability value corresponding to category 1 (e.g., 0.6), the second probability value corresponding to category 2 (e.g., 0.2), and the second probability value corresponding to category 3 (e.g., 0.2), i.e., the third predicted label is [0.6, 0.2, 0.2].

Step 207, determining a first loss value based on the first predicted labels and the first predicted box.

The first predicted label and the first predicted box are the predicted label and the predicted box corresponding to the high-quality pseudo label, and the high-quality pseudo label is also provided with corresponding annotation information, e.g., an annotation box and an annotation category ( referring to step 203, the predicted box corresponding to the high-quality pseudo label is used as the annotation box, and the predicted label corresponding to the high-quality pseudo label is used as the annotation category), therefore, on this basis, a classification loss value may be determined based on the first predicted label corresponding to the high-quality pseudo label and the annotation category corresponding to the high-quality pseudo label, and a coordinate box loss value may be determined based on the first predicted box corresponding to the high-quality pseudo label and the annotation box corresponding to the high-quality pseudo label. Then, the first loss value may be determined based on the classification loss value and the coordinate box loss value. The process of determining the first loss value may refer to the above process of determining the third loss value, and is not be repeated here.

Step 208, determining a second loss value based on the second predicted label, the second predicted box, the third predicted label, and the third predicted box. For example, the second predicted label and the second predicted box are the predicted label and the predicted box (output by the initial learning model) corresponding to the uncertain pseudo label, and the third predicted label and the third predicted box are also the predicted label and predicted box (output by the initial management model) corresponding to the uncertain pseudo label, therefore, on this basis, a classification loss value may be determined based on the second predicted label corresponding to the uncertain pseudo label and the third predicted label corresponding to the uncertain pseudo label, and a coordinate box loss value may be determined based on the second predicted box corresponding to the uncertain pseudo label and the third predicted box corresponding to the uncertain pseudo label. Then, the second loss value may be determined based on the classification loss value and the coordinate box loss value.

For example, the second predicted label includes C number of first probability values, the third predicted label includes C number of second probability values, and a classification loss value of consistency constraint may be determined based on the C number of first probability values and the C number of second probability values, where, the classification loss value of consistency constraint indicates a consistency constraint between the predicted label of the initial management model and the predicted label of the initial learning model. The first probability distributions of coordinate point offsets corresponding to the second predicted box may be determined, and the second probability distributions of coordinate point offsets corresponding to the third predicted box may be determined, and based on the first probability distributions and the second probability distributions, a coordinate box loss value of consistency constraint is determined, where, the coordinate box loss value of consistency constraint indicates a consistency constraint between the predicted box of the initial management model and the predicted box of the initial learning model. The second loss value may be determined based on the classification loss value and the coordinate box loss value.

In one possible implementation, a relative entropy between the first probability distributions and the second probability distributions may be determined, and based on the relative entropy, a coordinate box loss value of consistency constraint is determined.

For example, the uncertain pseudo label corresponds to the second predicted label and the second predicted box, and the third predicted label and the third predicted box, the classification loss value is determined based on the second predicted label and the third predicted label, and the coordinate box loss value is determined based on the second predicted box and the third predicted box. Then, the second loss value is determined based on the classification loss value and the coordinate box loss value. For example, the following formula (3) is used to determine the second loss value:

$$L = L_{loc} + L_{cls} \qquad (3),$$

where, $L$ represents the second loss value, $L_{loc}$ represents the coordinate box loss value, $L_{cls}$ represents the classification loss value.

For the classification loss value $L_{cls}$, the second predicted label includes C number of first probability values corresponding to C number of categories, the third predicted label includes C number of second probability values corresponding to C number of categories, and based on the C number of first probability values and the C number of second probability values, the following formula may be used to calculate the classification loss value of consistency constraint. Certainly, the following formula (4) is merely an example, which is not limited herein, as long as a classification loss value of consistency constraint may be determined based on the C number of first probability values and the C number of second probability values.

$$L_{c-cls} = \sum_{i=1}^{C} -p_{ti} \log p_{si} \qquad (4),$$

In the above formula (4), $L_{c-cls}$ represents the classification loss value of consistency constraint, C represents C number of categories supported by the initial learning model or the initial management model for detection, i represents the i-th category among the C number of categories, $p_{ti}$ represents the second probability value (belonging to the third predicted labels) corresponding to the i-th category output by the initial management model, and in practical application, $p_{ti}$ may be a probability value obtained after sharpening the second probability value corresponding to the i-th category, $p_{si}$ represents the first probability value (belonging to the second predicted labels) corresponding to the i-th category output by the initial learning model.

The value range of i is from 1 to C. When i is equal to 1, it represents the first category supported by the initial learning model for detection, $p_{ti}$ represents the second probability value corresponding to the first category, $p_{si}$ represents the first probability value corresponding to the first category, and so on. When i is equal to C, it represents the C-th category supported by the initial learning model for detection, $p_{ti}$ represents the second probability value corresponding to the C-th category, $p_{si}$ represents the first probability value corresponding to the C-th category.

For the coordinate box loss value $L_{loc}$, a proximity of the coordinates of four vertices of a second predicted box to the coordinates of four vertices of a third predicted box may be determined, if the proximity indicates that the second predicted box is closer to the third predicted box, the coordinate box loss value is smaller, and if the proximity indicates that the difference between the second predicted box and the third predicted box is larger, the coordinate box loss value is larger. For example, first probability distributions of coordinate point offsets corresponding to the coordinates of four vertices of the second predicted box are determined, i.e., coordinates of each vertex corresponds to a first probability distribution, and second probability distributions of coordinate point offsets corresponding to the coordinates of four vertices of the third predicted box are determined, i.e., coordinates of each vertex corresponds to a second probability distribution. When determining a probability distribution corresponding to coordinates of a vertex, the probability distribution is represented by a mean and a variance, e.g., the probability distribution corresponding to coordinates of the vertex x is $N(\mu_{tx}, \Sigma_{tx})$.

Based on the first probability distributions and the second probability distributions, a coordinate box loss value of consistency constraint may be determined. For example, the following formula may be used to calculate the coordinate box loss value of consistency constraint. Certainly, the following formula (5) is merely an example, which is not limited herein, as long as the coordinate box loss value may be obtained.

$$L_{c-loc} = \sum_{a=\{x,y,w,h\}} KL\left(N(\mu_{ta-t}, \Sigma_{ta-t}) \parallel N(\mu_{ta-s}, \Sigma_{ta-s})\right) \qquad (5),$$

In the above formula (5), $L_{c-loc}$ represents the coordinate box loss value of consistency constraint, $a$ represents coordinates of four vertices of the predicted boxes, e.g., $a$ may be the vertex coordinates (x, y), $a$ may be the vertex coordinates (x+w, y), $a$ may be the vertex coordinates (x, y+h), $a$ may be the vertex coordinates (x+w, y+h), i.e., $a$ may be the coordinates of the four vertices.

$KL$ represents the Kullback-Leibler (KL) divergence, also known as relative entropy or information divergence, $N(\mu_{ta-s}, \Sigma_{ta-s})$ represents the first probability distribution (also known as Gaussian distribution) of coordinate point offsets corresponding to the coordinates of a vertex $a$, i.e., the probability distribution corresponding to the second predicted box output by the initial learning model, $N(\mu_{ta-t}, \Sigma_{ta-t})$ represents the second probability distribution of coordinate point offsets corresponding to the coordinates of a vertex $a$, i.e., the probability distribution corresponding to the third predicted box output by the initial management model, and in practical application, sharpening may be performed on $\Sigma_{ta-t}$.

In summary, the relative entropy between the first probability distribution of coordinate point offsets corresponding to the vertex coordinates (x, y) and the second probability distribution of coordinate point offsets corresponding to the vertex coordinates (x, y) may be calculated, the relative entropy between the first probability distribution of coordinate point offsets corresponding to the vertex coordinates (x+w, y) and the second probability distribution of coordinate point offsets corresponding to the vertex coordinates (x+w, y) is calculated, the relative entropy between the first probability distribution of coordinate point offsets corresponding to the vertex coordinates (x, y+h) and the second probability distribution of coordinate point offsets corresponding to the vertex coordinates (x, y+h) is calculated, and the relative entropy between the first probability distribution of coordinate point offsets corresponding to the vertex coordinates (x+w, y+h) and the second probability distribution of coordinate point offsets corresponding to the vertex coordinates (x+w, y+h) is calculated. Then, the sum of the above-mentioned four relative entropies is calculated, which is the coordinate box loss value $L_{c\text{-}loc}$ of consistency constraint.

In summary, the classification loss value and the coordinate box loss value corresponding to the uncertain pseudo label may be obtained, and the second loss value corresponding to the uncertain pseudo labels may be determined based on the classification loss value and the coordinate box loss value.

Step 209, determining a target loss value of the initial learning model based on the first loss value, the second loss value, and the third loss value. For example, the average of the first loss value, the second loss value, and the third loss value may be used as the target loss value of the initial learning model, or, the sum of the first loss value, the second loss value, and the third loss value may be used as the target loss value of the initial learning model, which is not limited herein.

Step 210, adjusting network parameters of the initial learning model based on the target loss value, to obtain an adjusted learning model. For example, after obtaining the target loss value of the initial learning model, the network parameters of the initial learning model may be adjusted based on this target loss value, e.g., using a gradient descent method to adjust the network parameters of the initial learning model, the adjustment process is not limited in the embodiments herein.

Step 211, adjusting network parameters of the initial management model based on network parameters of the adjusted learning model, to obtain an adjusted management model. For example, by determining parameter correction values of network parameters based on the network parameters of the adjusted learning model and a configured proportion coefficient after obtaining the adjusted learning model, and adjusting the network parameters of the initial management model based on the parameter correction values, to obtain the adjusted management model.

For example, based on the network parameters of the adjusted learning model, the exponential moving average (EMA) algorithm may be used to determine the network parameters of the management model, thereby obtaining the adjusted management model. When using the EMA algorithm to determine the network parameters of the management model, the parameter correction values may be determined based on the network parameters of the adjusted learning model and a configured proportion coefficient, and the network parameters of the initial management model are adjusted based on the parameter correction values, to obtain the adjusted management model, the process is not limited herein.

Step 212, determining whether the adjusted management model has converged. If the adjusted management model does not converge, step 213 may be executed, and if the adjusted management model has converged, step 214 may be executed.

For example, if the number of iterations of the initial learning model or the initial management model reaches a number threshold, it is determined that the adjusted management model has converged, and if the number of iterations of the initial learning model or the initial management model does not reach a number threshold, it is determined that the adjusted management model does not converge. Alternatively, if the target loss value of the initial learning model is less than a loss value threshold, it is determined that the adjusted management model has converged, and if the target loss value of the initial learning model is not less than a loss value threshold, it is determined that the adjusted management model does not converge.

Step 213, if the adjusted management model does not converge, determining the adjusted learning model as the initial learning model, determining the adjusted management model as the initial management model, and returning to step 203.

Step 214, if the adjusted management model has converged, determining the converged adjusted management model as the target management model, which is the final model that needs to be output.

For example, after obtaining the target management model, object detection may be performed on data to be detected based on the target management model. For example, the data to be detected (e.g., images to be detected) may be input to the target management model, which outputs the target boxes in the data to be detected and identifies the targets or target categories, e.g., identifying a human face, identifying a vehicle category, identifying an animal category, identifying an electronic product category, etc., the process is not repeated herein.

As can be seen from the above technical solutions, in embodiments of the present disclosure, a target management model may be obtained by training with a mix of a small amount of labelled data and a large amount of unlabeled data, so as to avoid the acquisition of a large amount of labelled data, reduce the workload of annotation operations, save human resources, and enable the target management model to have good performance. The target management model, due to effectively utilizing pseudo-label data, has significantly improved compared to the baseline model. Setting different proportions of pseudo labels as high-quality pseudo labels can all achieve good training results, with good robustness to noisy samples and insensitivity to a hyperparameter. Based on the principle of maintaining consistency in the features after different augmentations of the same image, establishing a consistency constraint on the predicted boxes and predicted labels for unlabeled data under different augmentations can improve the robustness to noisy samples during training on the basis of effective use of pseudo-labelling. pseudo labels and consistency constraints may be combined, using pseudo labels as the true categories for reliable predicted boxes, and establishing consistency contrastive loss of different predicted results (or features) for uncertain predicted boxes. The predicted results (or features) for different views are used to constrain the same object from changing categorical properties under different augmentations, the management-learning model is used to produce a smoother and more stable classifier, and gradient backpropagation is performed only on the learning model.

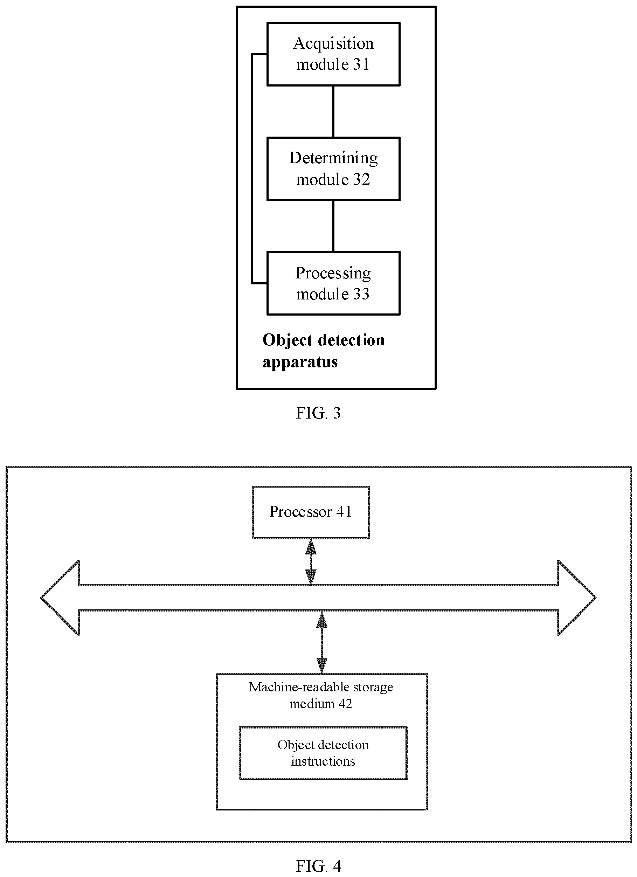

Based on a same application idea as the above methods, embodiments of the present disclosure provide an object detection apparatus, referring to FIG. 3, which is a structure diagram of the object detection apparatus, the apparatus may include:

an acquisition module 31 configured to acquire an initial management model and an initial learning model, add pseudo labels to unlabeled data based on the initial management model, and divide the pseudo labels into high-quality pseudo labels and uncertain pseudo labels; a determining module 32 configured to input the unlabeled data to the initial learning model, to obtain first predicted values corresponding to the unlabeled data; determine first predicted labels and first predicted boxes based on first predicted values corresponding to the high-quality pseudo labels; and determine second predicted labels and second predicted boxes based on first predicted values corresponding to the uncertain pseudo labels; input the unlabeled data to the initial management model, to obtain second predicted values corresponding to the unlabeled data, and determine third predicted labels and third predicted boxes based on second predicted values corresponding to the uncertain pseudo labels; a processing module 33 configured to train the initial management model based on the first predicted labels, the first predicted boxes, the second predicted labels, the second predicted boxes, the third predicted labels, and the third predicted boxes, to obtain a target management model; where, the target management model is configured to perform object detection on data to be detected.

For example, the acquisition module 31 is specifically configured to, when acquiring an initial management model and an initial learning model, train with labelled data to obtain a baseline model, and generate the initial management model and the initial learning model based on the baseline model; where, the initial management model has the same network structure as the baseline model, and the network parameters of the initial management model are the same or different from those of the baseline model; the initial learning model has the same network structure as the baseline model, and the network parameters of the initial learning model are the same or different from those of the baseline model.

For example, the acquisition module 31 is specifically configured to, when adding pseudo labels to unlabeled data based on the initial management model, and dividing the pseudo labels into high-quality pseudo labels and uncertain pseudo labels, for each unlabeled data piece, input the unlabeled data piece to the initial management model, to obtain a pseudo label corresponding to the unlabeled data piece and probability values corresponding to the pseudo labels; for each category supported by the initial management model for detection, sort all pseudo labels corresponding to the category based on the probability values of the all pseudo labels corresponding to the category; select, based on sorting results, K number of pseudo labels with high probability values as high-quality pseudo labels corresponding to the category, and determine remaining pseudo labels among the all pseudo labels corresponding to the category except for the high-quality pseudo labels corresponding to the category as uncertain pseudo labels corresponding to the category; where, the K is a positive integer.

For example, the processing module 33 is specifically configured to, when training the initial management model based on the first predicted labels, the first predicted boxes, the second predicted labels, the second predicted boxes, the third predicted labels, and the third predicted boxes, to obtain a target management model, determine a first loss value based on the first predicted labels and the first predicted boxes; determine a second loss value based on the second predicted labels, the second predicted boxes, the third predicted labels, and the third predicted boxes; and adjust the initial management model based on the first loss value and the second loss value, to obtain the target management model.

For example, the processing module 33 is specifically configured to, when determining a second loss value based on the second predicted labels, the second predicted boxes, the third predicted labels, and the third predicted boxes, if the second predicted label includes C number of first probability values corresponding to C number of categories supported by the initial learning model for detection, and that the third predicted label includes C number of second probability values corresponding to C number of categories supported by the initial management model for detection, determine a classification loss value of consistency constraint based on the C number of first probability values and the C number of second probability values; where, the C is a positive integer greater than 1; determine first probability distributions of coordinate point offsets corresponding to the second predicted boxes, determine second probability distributions of coordinate point offsets corresponding to the third predicted boxes, and determine a coordinate box loss value of consistency constraint based on the first probability distributions and the second probability distributions; and determine the second loss value based on the classification loss value and the coordinate box loss value.

For example, the processing module 33 is specifically configured to, when determining a coordinate box loss value of consistency constraint based on the first probability distributions and the second probability distributions, determine a relative entropy between the first probability distributions and the second probability distributions, and determine a coordinate box loss value of consistency constraint based on the relative entropy.

For example, the processing module 33 is specifically configured to, when adjusting the initial management model based on the first loss value and the second loss value, to obtain the target management model, adjust network parameters of the initial learning model based on the first loss value and the second loss value, to obtain an adjusted learning model; adjust network parameters of the initial management model based on network parameters of the adjusted learning model, to obtain an adjusted management model; if the adjusted management model does not converge, determine the adjusted learning model as the initial learning model, determine the adjusted management model as the initial management model, return to the execution of adding pseudo labels to unlabeled data based on the initial management model, and divide the pseudo labels into high-quality pseudo labels and uncertain pseudo labels; if the adjusted management model has converged, determine the adjusted management model as the target management model.

For example, the processing module 33 is specifically configured to, when adjusting network parameters of the initial management model based on network parameters of the adjusted learning model, to obtain an adjusted management model, determine parameter correction values of network parameters based on the network parameters of the adjusted learning model and a configured proportion coefficient, and adjust the network parameters of the initial management model based on the parameter correction values, to obtain the adjusted management model.

Based on a same application idea as the above methods, embodiments of the present disclosure provide an object detection device, referring to FIG. 4, where the object detection device may include a processor 41 and a machine-readable storage medium 42, the machine-readable storage medium 42 stores machine-executable instructions that can be executed by the processor 41, and the processor 41 is configured to execute the machine-executable instructions to implement the object detection method disclosed in the above examples of the present disclosure. For example, the processor 41 is configured to execute the machine-executable instructions to implement the following steps:

acquiring an initial management model and an initial learning model, adding pseudo labels to unlabeled data based on the initial management model, and dividing the pseudo labels into high-quality pseudo labels and uncertain pseudo labels;

inputting the unlabeled data to the initial learning model, to obtain first predicted values corresponding to the unlabeled data; determining first predicted labels and first predicted boxes based on first predicted values corresponding to the high-quality pseudo labels, and determining second predicted labels and second predicted boxes based on first predicted values corresponding to the uncertain pseudo labels;

inputting the unlabeled data to the initial management model, to obtain second predicted values corresponding to the unlabeled data, and determining third predicted labels and third predicted boxes based on second predicted values corresponding to the uncertain pseudo labels;

training the initial management model based on the first predicted labels, the first predicted boxes, the second predicted labels, the second predicted boxes, the third predicted labels, and the third predicted boxes, to obtain a target management model;

where, the target management model is configured to perform object detection on data to be detected.

Based on a same application idea as the above methods, embodiments of the present disclosure provide a machine-readable storage medium storing several computer instructions, when the computer instructions are executed by one or more processors, the object detection method disclosed in the above examples of the present disclosure can be implemented.

The machine-readable storage medium may be any electronic, magnetic, optical, or other physical storage apparatus, and may contain or store information, such as executable instructions, data, and so on. For example, the machine readable storage medium may be a Random Access Memory (RAM), a volatile memory, a non-volatile memory, a flash memory, a storage drive (e.g. hard disk drive), a solid state hard disk, any type of storage disk (e.g., compact disk, Digital Video Disk (DVD)), or a similar storage medium, or a combination thereof.

The system, apparatus, module, or unit described in the previous embodiments may be implemented by a computer chip or entity, or may be implemented by using a product with a certain function. An example of a device is a computer, and the form of the computer can be a personal computer, a laptop computer, a cellular phone, a camera phone, a smart phone, a personal digital assistant, a media player, a navigation device, an email sending and receiving device, a game console, a tablet computer, a wearable device, or a combination of any of these devices.

For convenience of description, when describing the above apparatus, the functions are divided into various units and described separately. Of course, when implementing the present disclosure, the functions of the units may be implemented in the same software or multiple software and/or hardware.

A person of ordinary skill in the art should understand that the implementations of the present disclosure may be provided as a method, a system, or a computer program product. Therefore, the present disclosure may take the form of an entirely hardware implementation, an entirely software implementation, or an implementation combining both software and hardware aspects. Moreover, the present disclosure may take the form of a computer program product implemented on one or more computer-usable storage media (including, but not limited to, disk memory, CD-ROM, optical memory, etc.) containing computer-usable program code.

The present disclosure is described with reference to a method, device (system), and computer program product flow chart and/or block diagram according to the embodiments of the present disclosure. It should be understood that, each process and/or block in the flowcharts and/or block diagrams as well as combinations of processes and/or blocks in the flowcharts and/or block diagrams may be implemented by computer program instructions. These computer program instructions may be provided to a processor of a general-purpose computer, a special purpose computer, an embedded processor or other programmable data processing device to generate a machine, such that the instructions executed by the processor of a computer or other programmable data processing device produce a device for achieving the functions specified in a flow chart or processes or processes and/or block diagram of one box or more boxes.

These computer program instructions may also be stored in computer-readable memory capable of booting a computer or other programmable data processing device to work in a particular manner, such that the instructions stored in the computer-readable memory produce manufactured products including an instruction device, the instruction device implements the function specified in a flow chart one or more processes and/or block diagram one box or more boxes.

These computer program instructions may also be stored in computer-readable memory capable of booting a computer or other programmable data processing device to work in a particular manner, such that the instructions stored in the computer-readable memory produce manufactured products including an instruction device, the instruction device implements the function specified in a flow chart one or more processes and/or block diagram one box or more boxes.

The above are only implementations of the present disclosure and are not intended to limit the present disclosure. For those skilled in the art, this disclosure may have various modifications and changes. Any modification, equivalent replacement, and improvement made within the spirit and principle of this disclosure shall be included in the scope of claims of this disclosure.

**Claims**

1. An object detection method, comprising:

   acquiring an initial management model and an initial learning model, adding pseudo labels to unlabeled data based on the initial management model, and dividing the pseudo labels into high-quality pseudo labels and uncertain pseudo labels;
   inputting the unlabeled data to the initial learning model, to obtain first predicted values corresponding to the unlabeled data; determining first predicted labels and first predicted boxes based on first predicted values corresponding to the high-quality pseudo labels, and determining second predicted labels and second predicted boxes based on first predicted values corresponding to the uncertain pseudo labels;
   inputting the unlabeled data to the initial management model, to obtain second predicted values corresponding to the unlabeled data, and determining third predicted labels and third predicted boxes based on second predicted values corresponding to the uncertain pseudo labels;
   training the initial management model based on the first predicted labels, the first predicted boxes, the second predicted labels, the second predicted boxes, the third predicted labels, and the third predicted boxes, to obtain a target management model;
   wherein the target management model is configured to perform object detection on data to be detected.

2. The method according to claim 1, wherein acquiring the initial management model and the initial learning model comprises:

   training with labelled data to obtain a baseline model; and
   generating the initial management model and the initial learning model based on the baseline model;
   wherein the initial management model has a same network structure as the baseline model;
   wherein the initial learning model has a same network structure as the baseline model.

3. The method according to claim 1, wherein adding pseudo labels to unlabeled data based on the initial management model, and dividing the pseudo labels into high-quality pseudo labels and uncertain pseudo labels comprises:

   for each unlabeled data piece, inputting the unlabeled data piece to the initial management model, to obtain a pseudo label corresponding to the unlabeled data piece and a probability value corresponding to the pseudo label;

for each category supported by the initial management model for detection,

sorting all pseudo labels corresponding to the category based on probability values of the all pseudo labels corresponding to the category;

selecting, based on sorting results, K number of pseudo labels with high probability values as high-quality pseudo labels corresponding to the category and determining remaining pseudo labels among the all pseudo labels corresponding to the category except for the high-quality pseudo labels corresponding to the category as uncertain pseudo labels corresponding to the category; wherein the K is a positive integer.

4. The method according to claim 1, wherein

inputting the unlabeled data to the initial learning model comprises: performing a first data augmentation on the unlabeled data, and inputting augmented unlabeled data after the first data augmentation to the initial learning model;

inputting the unlabeled data to the initial management model comprises: performing a second data augmentation on the unlabeled data, and inputting augmented unlabeled data after the second data augmentation to the initial management model;

wherein the first data augmentation and the second data augmentation use different augmentation manners.

5. The method according to claim 1, wherein training the initial management model based on the first predicted labels, the first predicted boxes, the second predicted labels, the second predicted boxes, the third predicted labels, and the third predicted boxes, to obtain the target management model comprises:

determining a first loss value based on the first predicted label and the first predicted box;

determining a second loss value based on the second predicted label, the second predicted box, the third predicted label, and the third predicted box; and

adjusting the initial management model based on the first loss value and the second loss value, to obtain the target management model.

6. The method according to claim 5, wherein determining the second loss value based on the second predicted label, the second predicted box, the third predicted label, and the third predicted box comprises:

in response to determining that the second predicted label comprises C number of first probability values corresponding to C number of categories supported by the initial learning model for detection, and that the third predicted label comprises C number of second probability values corresponding to C number of categories supported by the initial management model for detection, determining a classification loss value of consistency constraint based on the C number of first probability values and the C number of second probability values; wherein the C is a positive integer greater than 1;

determining first probability distributions of coordinate point offsets corresponding to the second predicted box, determining second probability distributions of coordinate point offsets corresponding to the third predicted box, and determining a coordinate box loss value of consistency constraint based on the first probability distributions and the second probability distributions; and

determining the second loss value based on the classification loss value and the coordinate box loss value.

7. The method according to claim 5, wherein

before adjusting the initial management model based on the first loss value and the second loss value, to obtain the target management model, the method further comprises: inputting labelled data to the initial learning model, to obtain third predicted values corresponding to the labelled data, determining fourth predicted labels and fourth predicted boxes based on the third predicted values, and determining a third loss value based on the fourth predicted label and the fourth predicted box;

adjusting the initial management model based on the first loss value and the second loss value, to obtain the target management model comprises: adjusting the initial management model based on the first loss value, the second loss value, and the third loss value, to obtain the target management model.

8. The method according to claim 5 or 7, wherein adjusting the initial management model based on the first loss value and the second loss value, to obtain the target management model comprises:

adjusting network parameters of the initial learning model based on the first loss value and the second loss value, to obtain an adjusted learning model; adjusting network parameters of the initial management model based on network parameters of the adjusted learning model, to obtain an adjusted management model;

in response to determining that the adjusted management model does not converge, determining the adjusted learning model as the initial learning model, determining the adjusted management model as the initial management model, returning to the execution of adding pseudo labels to unlabeled data based on the initial management model, and dividing the pseudo labels into high-quality pseudo labels and uncertain pseudo labels;

in response to determining that the adjusted management model has converged, determining the adjusted management model as the target management model.

9. The method according to claim 8, wherein adjusting network parameters of the initial management model based on network parameters of the adjusted learning model, to obtain the adjusted management model comprises:

determining parameter correction values of network parameters based on the network parameters of the adjusted learning model and a configured proportion coefficient, and

adjusting the network parameters of the initial management model based on the parameter correction values, to obtain the adjusted management model.

10. An object detection apparatus, comprising:

an acquisition module, configured to: acquire an initial management model and an initial learning model, add pseudo labels to unlabeled data based on the initial management model, and divide the pseudo labels into high-quality pseudo labels and uncertain pseudo labels;

a determining module, configured to: input the unlabeled data to the initial learning model, to obtain first predicted values corresponding to the unlabeled data; determine first predicted labels and first predicted boxes based on first predicted values corresponding to the high-quality pseudo labels; and determine second predicted labels and second predicted boxes based on first predicted values corresponding to the uncertain pseudo labels; input the unlabeled data to the initial management model, to obtain second predicted values corresponding to the unlabeled data, and determine third predicted labels and third predicted boxes based on second predicted values corresponding to the uncertain pseudo labels;

a processing module, configured to: train the initial management model based on the first predicted labels, the first predicted boxes, the second predicted labels, the second predicted boxes, the third predicted labels, and the third predicted boxes, to obtain a target management model; wherein, the target management model is configured to perform object detection on data to be detected.

11. An object detection device, comprising a processor and a machine-readable storage storing machine-executable instructions executed by the processor;

wherein, the processor is configured to execute the machine-executable instructions to implement the object detection method according to any one of claims 1 to 9.

12. A machine-readable storage medium, storing computer instructions thereon, when the computer instructions are executed by one or more processors to implement the object detection method according to any one of claims 1 to 9.

Acquire an initial management model and an initial learning model, add pseudo labels to unlabeled data based on the initial management model, and divide the pseudo labels into high-quality pseudo labels and uncertain pseudo labels — 101

Input the unlabeled data to the initial learning model, to obtain first predicted values corresponding to the unlabeled data; determine first predicted labels and first predicted boxes based on first predicted values corresponding to the high-quality pseudo labels, and determine second predicted labels and second predicted boxes based on first predicted values corresponding to the uncertain pseudo labels; input the unlabeled data to the initial management model, to obtain second predicted values corresponding to the unlabeled data, and determine third predicted labels and third predicted boxes based on second predicted values corresponding to the uncertain pseudo labels — 102

Train the initial management model based on the first predicted labels, the first predicted boxes, the second predicted labels, the second predicted boxes, the third predicted labels, and the third predicted boxes, to obtain a target management model; where, the target management model is configured to perform object detection on data to be detected — 103

FIG. 1

201

Train with labelled data to obtain a baseline model

202

Generate an initial management model and an initial learning model based on the baseline model

203

Add pseudo labels to unlabeled data based on the initial management model, and divide the pseudo labels into high-quality pseudo labels and uncertain pseudo labels

204

Perform data augmentation on labelled data, input the augmented labelled data to the initial learning model, to obtain third predicted values corresponding to the labelled data, determine fourth predicted labels and fourth predicted boxes based on the third predicted values, and determine a third loss value based on the fourth predicted label and the fourth predicted box

205

Perform a first data augmentation on unlabeled data, and input the augmented unlabeled data after the first data augmentation to the initial learning model, to obtain first predicted values corresponding to the unlabeled data; determine first predicted labels and first predicted boxes based on the first predicted values corresponding to the high-quality pseudo labels, and determine second predicted labels and second predicted boxes based on the first predicted values corresponding to the uncertain pseudo labels

206

Perform a second data augmentation on the unlabeled data, and input the augmented unlabeled data after the second data augmentation to the initial management model, to obtain second predicted values corresponding to the unlabeled data, and determine third predicted labels and third predicted boxes based on the second predicted values corresponding to the uncertain pseudo labels

207

Determine a first loss value based on the first predicted labels and the first predicted box

208

Determine a second loss value based on the second predicted label, the second predicted box, the third predicted labels, and the third predicted box

209

Determine a target loss value of the initial learning model based on the first loss value, the second loss value, and the third loss value

210

Adjust network parameters of the initial learning model based on the target loss value, to obtain an adjusted learning model

211

Adjust network parameters of the initial management model based on network parameters of the adjusted learning model, to obtain an adjusted management model

212

Determine whether the adjusted management model has converged

No

Yes

213

Determine the adjusted learning model as the initial learning model, determine the adjusted management model as the initial management model

214

Determine the converged adjusted management model as the target management model

FIG. 2

Acquisition
module 31

Determining
module 32

Processing
module 33

**Object detection
apparatus**

FIG. 3

Processor 41

Machine-readable storage
medium 42

Object detection
instructions

FIG. 4

## INTERNATIONAL SEARCH REPORT

| International application No. |
| --- |
| **PCT/CN2022/131320** |

**A.    CLASSIFICATION OF SUBJECT MATTER**

G06F 30/27(2020.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, CNKI, ENTXT, DWPI: 目标, 检测, 模型, 标签, 伪标签, 预测, 框, 概率, 排序, 增广, 损失, 收敛, objective, detection, model, label, pseudo-label, prediction, boxing, probability, ranking, augmentation, loss, convergence

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 114118259 A (HANGZHOU HIKVISION DIGITAL TECHNOLOGY CO., LTD.) 01 March 2022 (2022-03-01) entire description | 1-12 |
| A | CN 112686300 A (HANGZHOU HIKVISION DIGITAL TECHNOLOGY CO., LTD.) 20 April 2021 (2021-04-20) entire document | 1-12 |
| A | CN 111291755 A (TENCENT TECHNOLOGY SHENZHEN CO., LTD.) 16 June 2020 (2020-06-16) entire document | 1-12 |
| A | CN 111898696 A (TENCENT CLOUD COMPUTING (CHANGSHA) CO., LTD.) 06 November 2020 (2020-11-06) entire document | 1-12 |
| A | CN 111222648 A (SHENZHEN QIANHAI WEBANK CO., LTD.) 02 June 2020 (2020-06-02) entire document | 1-12 |
| A | US 2020012953 A1 (BAIDU ONLINE NETWORK TECHNOLOGY BEIJING CO., LTD.) 09 January 2020 (2020-01-09) entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 December 2022** | **12 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**Information on patent family members**

International application No.

**PCT/CN2022/131320**

| Patent document cited in search report | | | Publication date (day/month/year) | Patent family member(s) | | | Publication date (day/month/year) |
|---|---|---|---|---|---|---|---|
| CN | 114118259 | A | 01 March 2022 | None | | | |
| CN | 112686300 | A | 20 April 2021 | None | | | |
| CN | 111291755 | A | 16 June 2020 | US | 2022189147 | A1 | 16 June 2022 |
| | | | | WO | 2021159774 | A1 | 19 August 2021 |
| CN | 111898696 | A | 06 November 2020 | None | | | |
| CN | 111222648 | A | 02 June 2020 | None | | | |
| US | 2020012953 | A1 | 09 January 2020 | CN | 110737758 | A | 31 January 2020 |
| | | | | US | 11501182 | B2 | 15 November 2022 |

Form PCT/ISA/210 (patent family annex) (January 2015)

**EP 4 435 660 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111401508